# EUROPEAN PATENT SPECIFICATION

(11) **EP 2 727 664 B1**
(45) Date of publication and mention of the grant of the patent: **10.06.2015**
(21) Application number: 12191324.8
(22) Date of filing: 05.11.2012
(51) Int. Cl.: B21D 39/02, F16B 11/00

(54) **Method for making a hemmed structure of metal panels**
Verfahren zur Herstellung einer eingeklemmten Struktur aus Metallblechen
Procédé de fabrication d'une structure sertie de panneaux métalliques

(43) Date of publication of application: 07.05.2014
(73) Proprietor: 3M Innovative Properties Company, Saint Paul, MN 55133-3427 (US)
(72) Inventor: Koch, Bernhard Herman, 41453 Neuss (DE)
(74) Representative: Bergen, Katja

(56) References cited:
- EP-A1- 2 133 162
- WO-A1-03/099953
- WO-A1-2011/137241
- US-A- 5 650 215
- US-A- 6 000 118
- US-B1- 6 368 008

## Description

The present invention relates to a metal panel assembly method wherein two metal panels are joined together at an edge, forming a so-called hemmed structure.

Vehicle closure panels typically comprise an assembly of an outer and an inner metal panel whereby a hem structure is formed by folding an edge of an outer panel over an edge of the inner panel. Typically, an adhesive is provided inbetween to bond the panels together. Further, a sealant typically needs to be applied at the joint of the metal panels to provide for sufficient corrosion resistance as the metal panels are typically cut out of a galvanized metal sheet. As the metal exposed at the cutting edge of the panel is not galvanized, it will have to be protected against corrosion in the hem forming process. For example, US 6,000,118 discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel.

US 6,368,008 disclose the use of an adhesive for securing two metal panels together. The edge of the joint is sealed by a metal coating. A further hemmed structure is disclosed in US 6,528,176.

The art has further attempted to simplify the bonding and sealing of the hemmed structure by combining bonding and sealing into a single operation using an adhesive sheet that is aimed at providing both functions, i.e. providing a good bond strength combined with sealing of the hem such that it is protected against corrosion. For example WO11/137241 discloses an adhesive sheet for bonding and sealing metal panels in a hemmed structure. The adhesive sheet comprises a thermosetting composition comprising an epoxy resin and a thermoplastic resin having groups that are capable of reacting with an epoxy group. As shown in the examples, the adhesive sheet improves the gap sealing properties. However, it has been found that although the gap sealing properties have been improved, corrosion resistance should still be further improved. In particular, it has been found that the seal shows craters at the surfaces and voids below the surface of the seal making the seal prone to water absorption and corrosion of the metal edge of the panels joined in the hemmed structure.

It would now be desirable to find a solution whereby two metal panels, in particular an outer and an inner panel of a vehicle closure panel, can be joined with an adhesive without the need for a further material for sealing the joint. Thus, it will be desirable to find a method that provides adequate bonding while also sealing the joint and providing corrosion resistance. Typically the joint of the metal panels for a vehicle closure panel is formed early in the manufacturing process where the panels are often contaminated for example with grease or oil. It would thus be desirable to find an adhesive for securing the panels to each other that is oil-compatible and that in particular allows the build up of an adhesive bond of adequate strength notwithstanding the presence of oil on the surface of the metal panels. The adhesive bond desirably has good crash resistance and preferably has a good elongation at break such that stress that might be created at the joint can be adsorbed without causing failure of the bond. It would be desirable to find a solution that enables automatization of the process of forming the metal joint between the metal plates and hence it would be desired that the adhesive can be applied by automated equipment. Furthermore, as the seal of the hemmed structure is typically visible, it will be desired that an esthetic pleasing seal is formed by the method.

In one aspect, there is provided a method of making a metal panel assembly, the method comprising:
- providing a first metal panel having a first body portion and a first flange along a margin of the first body portion adjacent a first end of the first body portion;
- providing a second metal panel having a second body portion and a second flange along a margin of the second body portion adjacent a second end of the second body portion;
- providing an elongate adhesive sheet having a first portion near a first end of the width of the elongate adhesive sheet and a second portion near a second end opposite to the first end of the elongate adhesive sheet, the elongate adhesive sheet comprising a thermosettable composition, the elongate adhesive sheet having on at least one major surface a plurality of microstructures;
- applying the elongate adhesive sheet to said first or second metal panel;
- folding the first flange of the first panel over said second flange of said second panel;
   whereby a metal joint is obtained wherein the elongate adhesive sheet is folded such that the first portion of the elongate adhesive sheet is between the second flange of said second panel and said first body portion of said first panel and the second portion of the elongate adhesive sheet is between said first flange of said first panel and said second flange of said second panel;
- heating the metal joint so as to cause thermosetting of the thermosettable composition of the elongate adhesive sheet, thereby adhering said first and second metal panel and sealing the metal joint.

Preferred embodiments of the method of the invention are defined in the dependent claim 6.

It has been found that by providing microstructures on at least one major surface of the elongate adhesive sheet, the sealing of the metal joint of the hemmed structure formed thereby can generally be improved. In particular, it has been found that the seal has no or fewer craters and typically has improved corrosion resistance.

The invention is described herein with reference to the following schematic figures:
**Figure 1** is a cross-sectional view of an exemplary elongate adhesive sheet in accordance with an embodiment of the invention;
**Figure 2** illustrates a particular embodiment for providing a microstructured surface in the elongate adhesive sheet;
**Figure 3** is a cross-sectional view of a metal part assembly in accordance with the present invention.
**Figure 4** is an embodiment showing a cross-sectional view of an inner panel with an adhesive sheet applied thereto and an outer panel 10 before joining it with the inner panel.

The elongate adhesive sheet as used in the method of the present application has opposite major surfaces, at least one of which comprises a plurality of microstructures. By the term "microstructures" in connection with the present invention are structures meant that have one or more dimensions typically not more than 2000 microns, for example not more than 1500 microns or not more than 1000 microns. The microstructures comprise topographical features having typically a height or depth extending perpendicular to a plane of the adhesive sheet and at least one cross-sectional dimension as measured along a base of the feature parallel to or within the plane of the adhesive sheet. At least one of the features is a microstructure. For example, on a surface having a plurality of features forming a pattern of ridges and open channels, an individual channel may have a cross-section resembling an equilateral triangle having sides measuring not more than 2000 microns but the length of the channel may be several centimeters.

The shapes of the topographical features may vary widely and can be continuous or discontinuous. In a particular embodiment, the microstructures are continuous and comprise a plurality of channels separated by a plurality of ridges. In a particular embodiment, the channels have a depth (measured between the top of the neighboring ridges and the floor of the channel) of between 50 micron and 800 micron, for example between 100 and 500 micron or between 200 and 400 micron. The shape of the features at their cross-sectional dimensions may be of a wide variety. Shapes may include circular, triangular, quadrangular, pentagonal, hexagonal and the like. The features can be hemispheres, right pyramids, trigonal pyramids, square pyramids, quadrangular pyramids, hexagons, and channels for example V or U shaped channels. In a preferred embodiment, the adhesive sheet comprises a major surface having a plurality of channels separated by ridges. The sides of the ridges may have an angle α relative to the adhesive plane that can vary from greater than 0 to 90°. In a further particular embodiment, the plurality of microstructures may comprise a series on interconnected channels and ridges. For example, in a particular embodiment a series of channels parallel to one of two orthogonal directions in plane of the adhesive sheet may intersect with a series of channels parallel to the other of the two orthogonal directions. As a result, between the intersecting channels there is a series of plateaus defined. The channels may have a V or U shaped or any other cross-sectional shape and the plateaus may have any desired shape including square or rectangular. In a particular embodiment of such intersecting channels, the depth of the channels may be from 100 to 500 micron, for example from 200 to 400 micron and the distance between two neighboring channels in either of the orthogonal directions might be between 1 and 5 mm, for example between 2 and 4 mm.

In a particular embodiment, at least one major surface of the elongate adhesive sheet has a plurality of channels extending generally perpendicular to the length of the elongate adhesive sheet. By generally perpendicular is meant that the channels are at an angle between about 5 to 90° relative to the length direction of the elongate adhesive sheet.

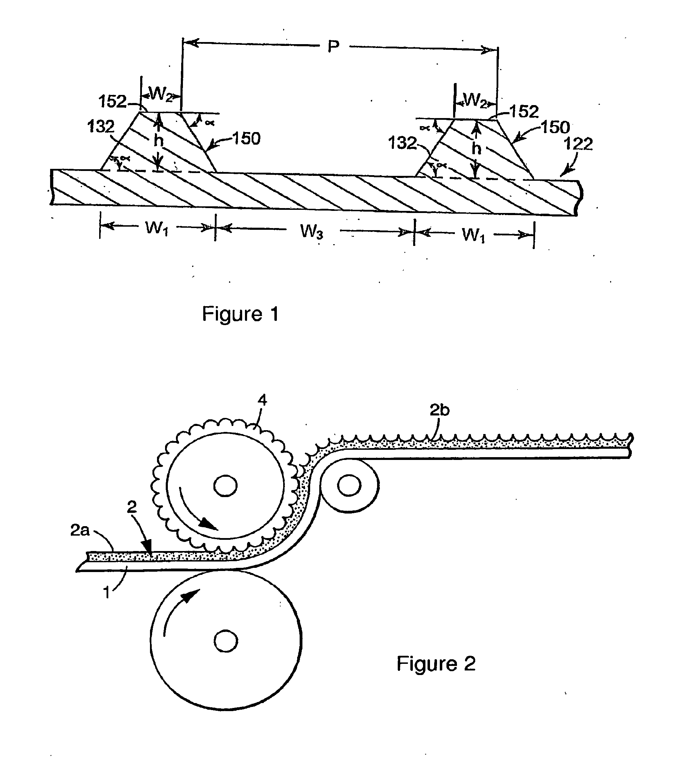

A cross-section of a particular embodiment of an adhesive sheet 122 including structures 150 is shown in FIG. 1. The dimensions of the microstructures may vary widely. The pitch P, i.e., the distance from one point on a topographical feature 150 to the same point on the next adjacent feature 150 may vary from about 5 micron to about 10 mm, and in some cases, from about 25 micron to about 5 mm, or between 0.1 mm and 4 mm. The height h of each feature 150 from a plane of the adhesive sheet 122 may vary from about 50 micron to about 800 micron, or from about 100 micron to about 500 micron or between 200 and 400 micron. The width of feature 150 at its base W₁ may vary widely and can be several millimeters, for example from 0.1 to 10 mm or from 1 to 5 mm. The distance W₂ across the top 152 of the feature 150 is typically from about 0.1 to 10 mm or from 1 to 5 mm. The distance W₃ between the bases of the feature 150 is typically from about 0 micron to about 800 micron, for example between 20 and 600 micron or between 50 and 500 micron or between 100 and 300 micron. The feature 150 has at least one sidewall 32 that makes an angle α with respect to a plane of the surface of the adhesive sheet 122. The angle α may be selected from an angle greater than 0° and less than 90°. In some instances the angle α may desirably be less than about 50°, as measured with respect to the plane of the surface of the adhesive sheet 122.
Although specific exemplary dimensions for suitable topographical features are detailed in FIG. 1 described above, it should be understood that there are no limitations on the size, shape, and/or dimensions of each individual topographical feature present on an outer surface of the adhesive sheet.

Providing a plurality of microstructures into one or both major surfaces of the elongate adhesive sheet can be accomplished by any of a variety of methods as known in the context of providing micro-replicated adhesive surfaces. Suitable methods are disclosed in for example WO 9511945 and include the following. In one embodiment (shown in figure 2), the elongate adhesive sheet 2 with a surface 2a in which a desired plurality of microstructures is to be created, is provided. The elongate adhesive sheet is guided between a set of rolls, whereby one of the rolls 4 has a microstructured surface that is the inverse of the topography to be created in the surface of the adhesive sheet. Through the pressure exerted between the set of rolls, the desired depth and height of the microstructures 2b can be obtained. Also, if a microstructured surface is desired on both major sides of the adhesive sheet, both rolls may comprise a microstructured surface. Where the surface of the adhesive sheet that is to be provided with a microstructured surface is protected by a release liner, the release liner may be removed prior to embossing by the microstructured embossing roll or embossing may be carried out with the release liner being present. In the latter case the release liner may be pressed into the microstructure and is desirable a flexible release liner such as a thin film layer or may be a thin paper liner.

In another embodiment, a release liner having on a major surface a plurality of microstructures is used to provide the adhesive sheet with a microstructured surface. In this particular embodiment, the topology of the microstructured surface of the release liner is the inverse of the topology of the microstructured surface desired on the surface of the adhesive sheet. In one variant of this embodiment, the release liner is laminated to the adhesive sheet so as to replicate the microstructure into the surface of the adhesive sheet to which the liner is laminated. Alternatively, the thermosetting composition of the adhesive sheet may be coated on the microstructured surface of the release liner.

Further methods for providing the adhesive sheet with a plurality of microstructures on one or both of its major sides can be found in EP 1 277 818, WO 03/099953, WO 98/29516 and WO 2005/052082.

The elongate adhesive sheet used in the method, comprises a thermosettable composition. While any thermosettable composition can be used a particular suitable composition comprises an epoxy compound and an epoxy curing agent.

Any organic compound having at least one oxirane ring polymerizable by a ring opening reaction may be used as an epoxy compound in the thermosettable composition of the elongate adhesive sheet according to the invention. Such materials, broadly called epoxies, include monomeric epoxy compounds and polymeric epoxy compounds and can be aliphatic, cycloaliphatic, aromatic or heterocyclic. Useful materials generally have at least two polymerizable epoxy groups per molecule and, more preferably, from two to four polymerizable epoxy groups per molecule.

These epoxy compounds are generally liquid, or semi-liquid, at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds. Suitable epoxy compounds for use herein are commercially available from Momentive under tradename Epikote^{™} 828; from Dow Chemical Co. under tradename DER 331, DER 332 and DER 334; from Resolution Performance Products under tradename Epon® 828; from Polysciences, Inc. under tradename Epon® 825 / 826/ 830/ 834/ 863/ 824; from Hexion under tradename Bakelite® EPR 164; from Huntsman under tradename Araldite® GY 250/260; or from Leuna Harze under tradename EPILOX® A 1900.

Epoxy compounds which are useful in the elongate adhesive sheet are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or therebetween. More preferably, the organic epoxies are selected from the group comprising diglycidyl ethers of bisphenol A and bisphenol F and epoxy novolacs.

In a particular embodiment the epoxy compound conveniently has an average epoxy equivalent weight of not more than 250g/equivalent. In another embodiment, the epoxy compound for use herein has an average epoxy equivalent weight of not more than 230g/equivalent, for example not more than 220g/equivalent, or not more than 200g/equivalent. Preferably, the epoxy compound for use herein has an average epoxy equivalent weight comprised between 100 and 200g/equivalent, preferably between 150 and 200g/equivalent, more preferably between 170 and 200g/equivalent. Preferably still, the epoxy compound for use herein has a weight average molecular weight of not more than 700 g/mol, preferably not more than 500 g/mol, more preferably not more than 400 g/mol. Advantageously, the epoxy compound for use herein has a weight average molecular weight comprised between 200 and 400 g/mol, preferably between 300 and 400 g/mol, more preferably between 350 and 400 g/mol. The epoxy compound for use herein is preferably selected from the group of epoxy compounds having an average epoxy functionality, i.e. an average number of polymerizable epoxy groups per molecule, of at least 2 and, more preferably, from 2 to 4.

The amount of epoxy compound in the thermosettable composition of the elongate adhesive sheet is typically comprised between 30 and 60 wt%, preferably between 40 and 60 wt%, more preferably between 50 and 60 wt%, based on total weight of the thermosettable composition.

The thermosettable composition based on an epoxy curing mechanism further comprises an epoxy curing agent. Any epoxy curing agent, commonly known in the art, may be used in the thermosettable composition of the elongate adhesive sheet. Suitable epoxy curing agents for use herein include materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols. Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure^{®} CG-1200.

The amount of epoxy curing agents in the thermosettable composition of the elongate adhesive sheet is typically comprised between 2 and 15 wt%, preferably between 2 and 8 wt%, more preferably between 2.5 and 4 wt%, based on total weight of the thermosettable composition.

In a particular preferred embodiment, the thermosettable composition of the elongate adhesive sheet further comprises a thermoplastic resin. Typically the thermoplastic resin has a softening point comprised between 60°C and 140°C. Suitable thermoplastic resins for use herein will be easily identified by those skilled in the art, in the light of the present description. Thermoplastic resins may also frequently be referred to as film forming agents.

In a particular embodiment, thermoplastic resins for use herein have a softening point comprised between 70°C and 120°C, for example between 80°C and 100°C, or between 85°C and 95°C. Examples of thermoplastic resins for use herein include those selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof.

In a particular embodiment, the thermoplastic resin is selected from the group of polyether thermoplastic resins, and preferably polyhydroxyether thermoplastic resins. For example, thermoplastic resins for use herein are selected from the group of polyhydroxyether thermoplastic resins, which may be selected from the group consisting of phenoxy resins, polyether diamine resins, polyvinylacetal resins, in particular polyvinyl butyral resins, and any combinations or mixtures thereof. Examples of suitable polyvinylacetal resins for use herein include Vinyl Chloride/Vinyl Acetate Copolymers, Carboxyl-Modified Vinyl Copolymers, and Hydroxyl-Modified Vinyl Copolymers, commercially available from Dow Chemicals. In a very preferred aspect of the invention, the thermoplastic resin for use herein is selected from the group of phenoxy resins. Suitable thermoplastic resins for use herein are commercially available from InChem Corporation under trade designation PKHP, PKHH, PKHA, PKHB, PKHC, PKFE, PKHJ, PKHM-30 or PKHM-301.

The amount of thermoplastic resin in the thermosettable composition of the elongate adhesive sheet is typically comprised between 10 and 50 wt%, preferably between 15 and 30 wt%, more preferably between 20 and 30 wt%, based on total weight of the thermosettable composition.

In a particular embodiment, the thermosettable composition of the elongate adhesive sheet may further comprise one or more toughening agents. Any toughening agent, commonly known in the art, may be used in the thermosettable composition of the elongate adhesive sheet of the invention. The toughening agents are preferably selected from a group comprising core-shell toughening agents, CTBNs (carboxyl and/or nitrile terminated butadiene/nitrile rubbers) and high molecular weight amine terminated polytetramethylene oxide.

Core-shell toughening agents which are especially preferred, usually comprise different materials in the inner core region and the outer shell region, respectively. Preferably, the core may be harder than the shell but this is not required. The shell may comprise harder material and/or the shell may be layered in its construction. Most preferably, the inner hard core component is comprised of a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may be comprised of rubbers such as diene, olefin rubbers, natural rubber, polyisoprene, copolymers thereof, ethylene propylene monomer rubber, diene-acrylonitrile copolymers, copolymers of vinyl aromatic monomers, styrene-butadiene copolymers known as SBR rubbers, and terpolymers of dienes with acrylonitrile or unsaturated esters and styrene or vinyl toluene. The soft shell preferably includes modifications with functionalities such as carboxyl, hydroxyl, epoxy, cyanates, isocyanates, amino, and thiol which can react with the epoxy components of the precursor. Core-shell toughening agents which are useful in the thermosettable composition are commercially available, for example, from Rohm and Hass under the trade designation Paraloid^{™}.

CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents which are useful in the present invention are commercially available, for example, from Hanse Chemie AG, Hamburg, Germany, under the trade designation Albipox™.

A high molecular weight amine terminated polytetramethylene oxide useful in the thermosettable composition is commercially available, for example, from 3M Company, St. Paul/MN, USA, under the trade designation "3M EPX™ Rubber".

The amount of the one or more toughening agents when present in the thermosettable composition is typically comprised between from 10 to 40 wt%, preferably between 10 and 30 wt%, more preferably between 10 and 20 wt%, based on total weight of the thermosettable composition.

In a particular embodiment of the elongate adhesive sheet, the weight ratio of the toughening agent and the thermoplastic resin may be comprised between 1 and 4, preferably between 1 and 3, more preferably between 1.5 and 2.5, even more preferably between 1.8 and 2.2.

In a particular embodiment, the thermosettable composition of the elongate adhesive sheet may further comprise one or more blowing agents. Any blowing agent, commonly known in the art, may be used in the thermosettable composition of the elongate adhesive sheet.

By including a blowing agent in the thermosettable composition of the elongate adhesive sheet, the elongate adhesive sheet becomes heat expandable and may be referred to as an expandable elongate adhesive sheet. Accordingly, by heating, for example during the heating to cause thermosetting of the adhesive sheet, the elongate adhesive sheet expands which may help sealing of any gap in the metal joint. As a result, corrosion resistance may be improved. The one or more blowing agents are preferably selected from the group of non-encapsulated and encapsulated blowing agents.

Non-encapsulated blowing agents, which are sometimes also referred to as chemical blowing agents, release a gaseous compound such as nitrogen, nitrogen oxide, hydrogen or carboxide dioxide during heating. Chemical blowing agents which are useful in the present invention include, for example, azobisisobutyronitriles, azodicarbonamides, carbazides, hydrazides, non-azo chemical blowing agents based on sodium borohydride or sodium bicarbonate/citric acid and dinitrosopentamethylenetetramine. The amount of the one or more chemical blowing agents is typically comprises between 0.2 and 2 wt%, preferably between 0.5 and 1.5 wt%, based on the total weight of the thermosettable composition.

Encapsulated blowing agents usually comprise liquefied gases such as, for example, trichlorofluoromethane or hydrocarbons such as n-pentane, iso-pentane, neo-pentane, butane and/or iso-butane encapsulated in a polymeric thermoplastic shell. Upon heating the liquefied gas expands and enlarges or blows up the thermoplastic shell like a "microballoon". Typically, the amount one or more encapsulated blowing agents may be advantageously comprised between from 0.5 to 10 wt%, preferably from 1 to 5 wt%, more preferably from 1 to 2 wt%, based on the total weight of the thermosettable composition. Encapsulated blowing agents, which are useful in the thermosettable composition, are commercially available, for example, from Pierce & Stevens Chemical Corp under the trade designation Micropearl™, from Matsumoto under the trade name Microsphere™ or from Akzo Nobel under the trade name Expancel™.

In a particular embodiment, the amount of one or more blowing agents is selected such as to provide the elongate adhesive sheet with a free expansion rate upon curing of not more than 50%, preferably not more than 40%, more preferably not more than 30%, when subjecting the elongate adhesive sheet to a curing temperature above the activation (onset) temperature of the curing reaction, and when measured as described in the Test Methods section. More in particular, the amount of one or more blowing agents is selected such as to provide the elongate adhesive sheet with a free expansion rate upon curing of between 10 and 40%, preferably between 10 and 30%, more preferably between 15 and 25%.

The thermosettable composition may optionally comprise further components, additives and/or agents. Other optional ingredients that may advantageously be incorporated into thermosettable composition include wetting agents, such as those selected from the group consisting of titanates, silanes, zirconates, zircoaluminates, phosphoric ester(s) and mixtures thereof. The wetting agent improves the mixability and processability of the composition and can also enhance the composition's handling characteristics. Useful wetting agents are disclosed in U.S. 5,019,605. An especially useful wetting agent is commercially available as Coatex DO-UP6L from Coatex, Gene, France.

Other optional ingredients which may be used include additives, agents or performance modifiers such as e.g. flame retardants, impact modifiers, heat stabilizers, colorants, processing aids, lubricants, and reinforcing agents.
In a particular aspect, the thermosettable composition may comprise one or more fillers which may be used to regulate rheological properties of the precursor and adjust its viscosity to improve and adjust its processability for specific applications. Preferred fillers for use herein are selected from the group consisting of filler particles, microspheres, expendable microspheres, preferably pentane filled expendable microspheres or gaseous cavities, glassbeads, glass microspheres, hydrophobic silica type fillers, hydrophilic silica type fillers, fibers, electrically and/or thermally conducting particles, nano particles, and any combinations thereof. Preferred fillers for use herein are selected from the group of inorganic fillers, including silica. One preferred filler for use herein is hydrophobic fumed silica, which is commercially available as Aerosil^{™} from Degussa or CAB-O-SIL^{™} from Cabot. Another preferred filler for use herein is expanded perlite, which is commercially available under the trade designation Eurocell^{®} from Europerl, Germany. Typically, the amount of filler may be advantageously of not more than 10 wt%, based on the total weight of the thermosettable composition.

In another particular embodiment, the thermosettable composition may comprise one or more incompressible particulate material, such as e.g. solid glass beads commercially available from Kominex Mineralmahlwerk, GmbH. In the context of the present invention, it has been found that when incompressible particulate material is comprised in the thermosettable composition of the elongate adhesive sheet according to the invention, undesirable squeezing-out of the elongate adhesive sheet before curing may be advantageously avoided during the compression step, when the elongate adhesive sheet is used for bonding metal parts.

In a preferred embodiment of the elongate adhesive sheet, the adhesive sheet has an elongation at break of at least 60% when measured according to tensile test DIN EN ISO 527. The desired elongation at break can be obtained by appropriate selection of the nature and amounts of components of the thermosettable composition. For example, in case of a thermosettable composition comprising an epoxy compound, epoxy curing agent and thermoplastic resin the desired elongation may be obtained by selecting the weight ratio of the epoxy compound and the thermoplastic resin, and when present, the amount of the toughening agent, In a particular embodiment, the elongate adhesive sheet has an elongation at break of at least 100%, preferably at least 200%, more preferably at least 500%, even more preferably at least 700%, still more preferably at least 900%, when measured according to tensile test DIN EN ISO 527. Advantageously, the elongate adhesive sheet is provided with an elongation at break of not more than 3000%, preferably not more than 2500%, more preferably not more than 2000%, in particular not more than 1500%, when measured according to tensile test DIN EN ISO 527.

The elongate adhesive sheet may be readily prepared by a number of techniques. For example, the various components may be added under ambient conditions to a suitable internal mixing vessel, such as a Mogul mixer. The mixing temperature is not critical and the mixing of the first and second epoxy components and the optional toughening agent component is typically performed at a temperature of 80-85°C. When the epoxy curing agent component and the optional blowing agent component is added the temperature may preferably be decreased to not more than 70°C. Mixing is continued until the components form a homogeneous mixture, after which time the thermosettable composition is removed from the mixer.

Typically, the thermosettable composition can be processed as a film by conventional application equipment such as extruders or hot-melt coaters. The thermosettable composition may be processed as a self-supporting sheet or may alternatively be coated/laminated onto a suitable release liner, such as e.g. a siliconized liner.

The elongate adhesive sheet according to the invention is typically a soft conformable film, and may or may not be tacky at room temperature. Prior to curing, the elongate adhesive sheet is preferably deformable and drapable so that it can applied to curved surfaces and assume any two-dimensional shape. In accordance with a particular embodiment, the elongate adhesive sheet may be heated prior to, while or subsequent to applying on the metal panel typically so as to further enhance its ability of conforming to the metal panel surface. The temperature at which the heating is carried will typically be controlled in such a way so as to avoid a leveling or disappearance of the microstructures, for example substantial closing of channels while achieving a desired level of conforming. The temperature to be used will depend in general on the size of the microstructures used as well as the rheology of the thermosettable composition and softening point and flow characteristics of the thermosettable composition when softened to a particular selected temperature.

The thickness of the elongate adhesive sheet material may vary widely. Useful thicknesses have been found to be in the range of about 0.05 mm (millimeters) to 25 mm. For typical joining of metal panels, thicknesses may range from 0.1 to 5 mm, for example from 0.1 to 3 mm, or from 0.3 to 1 mm.

The elongate adhesive sheet may be packaged in the form of rolls of material, rolls of tapes, i.e., lengths of material in narrow widths, or stacks of sheets cut to a desired dimension or shape for the end use. If the adhesive sheet is tacky, a release liner may be interleaved between adjacent sheets or wraps of a roll.

The elongate adhesive sheet of the invention may include one or more layers. The adhesive film may also include a netting. A suitable netting includes an open cloth or fabric of a polymeric material. Generally, the netting will be soft and may be stretchable. A particular example includes a heat set, soft and stretchy open nylon knitted cloth. The netting may have a thickness of 1 to 15 g/m², for example 5 to 12 g/m². A useful material includes 3M^{™} Scotch-Weld^{™} 3336 available from 3M Co. The elongate adhesive sheet may also include an open non-woven layer such as a scrim.

The method of making a metal panel assembly as set out in this application comprises:
- providing a first metal panel having a first body portion and a first flange along a margin of the first body portion adjacent a first end of the first body portion;
- providing a second metal panel having a second body portion and a second flange along a margin of the second body portion adjacent a second end of the second body portion;
- providing an elongate adhesive sheet having a first portion near a first end of the width of the elongate adhesive sheet and a second portion near a second end opposite to the first end of the elongate adhesive sheet, the elongate adhesive sheet comprising a thermosettable composition, e.g. as described above and the elongate adhesive sheet having on at least one major surface a plurality of microstructures;
- optionally heating the elongate adhesive sheet, typically so as to soften the elongate adhesive sheet enabling it to conform to the first or second metal panel when applied thereto;
- applying the elongate adhesive sheet to said first or second metal panel;
- folding the first flange of the first panel over said second flange of said second panel;
   whereby a metal joint is obtained wherein the elongate adhesive sheet is folded such that the first portion of the elongate adhesive sheet is between the second flange of said second panel and said first body portion of said first panel and the second portion of the elongate adhesive sheet is between said first flange of said first panel and said second flange of said second panel;
- heating the metal joint so as to cause thermosetting of the thermosettable composition of the elongate adhesive sheet, thereby adhering said first and second metal panel and sealing the metal joint.

In accordance with a particular embodiment, optional heating of the elongate adhesive sheet is typically intended to soften it and is typically carried out at a temperature between 30°C and 120°C, for example between 50 and 100°C. Generally, heating may be carried out prior to application of the elongate adhesive sheet or whilst applying it. Although the elongate adhesive sheet is typically already a soft sheet having conformability properties, further softening by heating may enhance its ability to conform to the surface of the metal panel to which it is applied. To heat the adhesive sheet, any suitable heating means may be applied but in conjunction with an automatic application process, the use of a hot or warm air blower, blowing warm or hot air to the adhesive sheet has been found to be particularly suitable. The temperature of the air that is blown onto the adhesive sheet will typically be set higher than the desired temperature at the surface of the adhesive sheet to take account of cooling of the air stream leaving the blower. Typically, the air blower may be operated at a temperature of 10 to 80°C higher t han the desired temperature.

As discussed above, the microstructured surface of the adhesive sheet may be provided therein by an embossing roll. Accordingly, in one particular embodiment, the embossing roll is provided in the application head of an applicator, e.g. a robot, just prior to a heating station in the applicator. Accordingly the adhesive sheet without a microstructured surface will be embossed by the embossing roll and then be heated in the heating station of the applicator following which the adhesive sheet is applied to the metal panel. This offers a number of advantage. For example, the manufacturing costs of the adhesive sheet can be kept minimal and furthermore, different microstructured patterns can be applied as desired by exchanging the embossing roll, leading to a higher manufacturing flexibility.

Further in the above embodiment where the embossing is carried out within the applicator, where the adhesive sheet is protected by a release liner, the release liner may be removed prior to embossing or embossing may be carried out through the release liner as discussed above. Further, where embossing is carried directly to the thermosetting adhesive composition rather than through a liner, it may be desirable to provide the surface of the embossing roll with release or anti-stick features.

Preferably, the elongate adhesive sheet is adhered to the second metal panel with the elongate adhesive sheet being adhered to the second flange of the second metal panel and folded around the second end of the second metal panel such that the elongate adhesive sheet is adhered to opposite sides of the second flange of the second metal panel.

The metal panels are typically steel parts and panels but other metal parts and panels such as aluminium parts and panels may be used as well in connection with the invention. In a particular embodiment, the metal parts are unpainted, i.e. they are body in white parts as they are known or called in the automotive industry.

Typically the joint of the metal panels for a vehicle closure panel is formed early in the manufacturing process where the panels are often contaminated for example with grease or oil. The elongate adhesive sheet used in connection with the method typically allows bonding of the metal parts and panels to an adequate level while also providing good sealing properties on the joint thereby providing corrosion resistance.

Further, the elongate adhesive sheet can generally be applied to metal panels that may be contaminated to some extent with for example oil and generally there will be no need for cleaning of the parts or panels prior to applying the adhesive sheet. Application of the elongate adhesive sheet through automated equipment such as robot heads is conceivable as well. Moreover, an initial adhesive bond of sufficient strength can be formed such that the metal parts can be held together without the need for clamping during further handling of the joint or manufacturing steps such as for example painting, and prior to thermosetting and forming of the final and permanent bond.
The final adhesive bond advantageously has good crash resistance and preferably has a good elongation at break such that stress that might be created at the joint can be adsorbed without causing failure of the bond. Further, the elongate adhesive sheet according to the invention is sufficiently resistant to washing out and accordingly, the metal parts joint together by the adhesive sheet can be subjected to a washing operation, for example as may be necessary prior to painting.

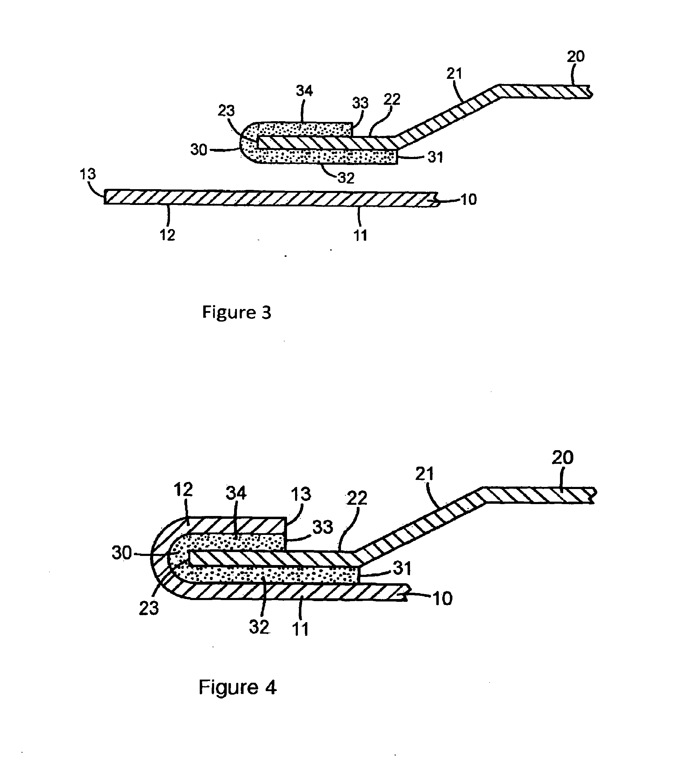

**Figure 3** shows an embodiment in connection with the present invention. As shown in **Figure 3****,** the outer panel **10** comprises a body portion **11** with a flange **12** along a margin of the body portion near end **13** of the outer panel **10.** The flange **12** is folded over flange **22** of the inner panel **20.** Flange **22** of inner panel **20** is along a margin of body portion **21** of the inner panel near end **23.** End **23** is adjacent flange **12** of the outer panel **10.** A elongate adhesive sheet **30** is located between the inner **20** and outer panel **10.** A portion **32** near end **31** of the elongate adhesive sheet **30** is located between body portion **11** of outer panel **10** and the flange **22** of inner panel **20.** The elongate adhesive sheet **30** is folded over inner panel **20** and hence portion **34** near end **33** of the elongate adhesive sheet **30** is between flange **12** of the outer panel **10** and flange **22** of the inner panel **20.** The elongate adhesive sheet **30** bonds the two metal panels together at the joint or hem.

In accordance with one aspect illustrated in **Figure 4****,** a metal part assembly in accordance with the present invention, for example as illustrated in **Figure 3****,** may be obtained by adhering the elongate adhesive sheet **30** to the inner metal panel **20.** However, it is also possible to instead adhere the elongate adhesive sheet **30** to the outer panel prior to joining the metal panels (not illustrated). As shown in **Figure 4****,** the elongate adhesive sheet **30** is adhered to the inner panel **20** at opposite sides of flange **22** of the inner panel and adhesive sheet 30 is folded around end **23** of the inner panel. In one particular aspect, the elongate adhesive sheet **30** has a surface that is tacky at ambient temperature, typically about 20°C, and can be adhered to the inner panel via this tacky surface. Typically, the elongate adhesive sheet allows forming an adhesive bond sufficient to hold the metal parts together in the metal joint without requiring curing of the thermosettable composition of the elongate adhesive sheet.

The outer panel **10** may then be folded such that the flange **12** of the outer panel is folded over the flange **22** of the inner panel **20** and over portion **34** of the elongate adhesive sheet **30**. Accordingly, outer panel **10** will be folded over inner panel **20** with the elongate adhesive sheet located between the two panels and thus a metal joint is obtained. In case the elongate adhesive sheet **30** was adhered to the outer panel **10** instead of inner panel **20,** the elongate adhesive sheet **30** will be folded in-between the panels during folding of the outer panel **10** over flange **22** of the inner panel **20.**

The metal joint obtained is then heated to cause thermosetting of the thermosettable composition of the elongate adhesive sheet, thereby forming a permanent adhesive bond between the panels and sealing the joint. This heating step can conveniently be performed whilst the panel assembly is being painted and baked as part of a usual vehicle manufacturing process. However, as desired, a separate heating or baking step of the metal joint may be provided as well. Typically, the temperature for heating the metal joint and to cause adhering and sealing, is between 60 and 200°C, for example between 100 and 150°C. Heating may be carried out in one or more steps. For example two or more heating cycles at different temperatures in the aforementioned range may be carried out. For example in a particular aspect, a first heating step may heat the metal joint to a temperature between 60 and 100°C and in a further heating step a higher temperature of between 80 and 200°C may be used. The heating time may vary but is typically between 5 minutes and 60 min, for example between 10 and 30 min.. When several heating steps are used, the time for each of the heating steps may vary and may be within the aforementioned ranges.

The invention is further illustrated by the following examples which are for illustrative purposes only.

### EXAMPLES

### Test Methods

### 1. Corrosion Resistance in accordance with DIN EN ISO 9142, test procedure E2-Exposure in humid cataplasm

### Sample preparation:

Prior to sample preparation the adhesive films were conditioned 24 hours under normal conditions (23°C +/- 2°C and relative humidity 50 +/- 5%).

Then strips of the adhesive film, 15 mm wide x 140 mm long, were cut using a cutting knife. For providing samples with a microstructure in the adhesive layer the following described procedure was followed.
The adhesive strips were placed on a even surface with the adhesive side facing upward and a slightly overstanding polyethylene (PE) mesh (commercially available as insect screens like e.g. obtainable from Tesa with a mesh size of 20 X 20) was placed without pressure on-top of the adhesive layer. The polyethylene (PE) mesh was then over-rolled manually using a 1kg steel handroller with one pass in each direction and the PE mesh then removed. Accordingly a plurality of interconnected channels was obtained having a depth of 50 to 200 micron, a distance between the channels of about 2 mm. Between the interconnected channels, a plateau was defined having a square shape.
In a next step the adhesive strips were applied between two panels made from hot dipped galvanized steel panels (commercially available as Etalon steel, reference GC 300500AA from Societee Etalon; France) the outer panel having the following dimension 140 mm width X 140 mm length X 0.7 mm height and the inner panel having a slightly smaller dimension in order to be insertable into the outer panel and its overfold. The adhesive strips were applied to the inner panel and were heated by blowing hot air on to them thereby further softening the adhesive strips. The inner panel and outer panel were then adhered to each other and a hem was formed. The test assemblies were then cured for 30 minutes at 180 °C in an air circulating oven. Hereby the test assemblies were heated up and cooled down using 3°C/minute ramps. Before testing all test assemblies were conditioned for 24 hours at ambient conditions (23 +/-2°C and 50 +/-5 % relative humidity)

### Sample testing:

For the preparation of the humid cataplasm a strip of cotton wool measuring 180 X 500 mm and with a mass of 45g +/- 5g was used. Each test assembly was then completely wrapped with the cotton wool strip and placed into a low density polyethylene bag having a thickness of 120 µm +/- 10µm and a gram per square meter capacity of 100 g/m² +/- 10 g/m². Then a mass of de-ionised water ( resistivity ≥ 100000 Ohm.cm), equal to 10 times that of the cotton wool strip was poured into the polyethylene bag using a 500 ml measuring cylinder and evenly distributed within the bag. Excess air was removed from the polyethylene bag by smoothing the bag out by hand and the bag was sealed by using a soldering gun suitable for polyethylene. To ensure a perfect seal during testing, the sealed first polyethylene bag was placed in a second polyethylene bag which was soldered as the first bag.
The sealed polyethylene bag was then placed into a ventilated dry heat chamber, commercially available as APT-line M from Binder GmbH (Germany) for 24 hours at 70 °C +/- 2°C. After 24 hours the bag was removed from the heat chamber and placed within 3 minutes into a adjustable cold chamber, commercially available as Liebherr Premium from Liebherr (Germany) at -20°C +/- 2°C. The bag with the test assembly was then allowed to cool down to -20°C for 10 minutes before the dwell time of 2 hours started to be recorded After dwell time completion in the cold chamber the bag was removed and placed again into the dry heat chamber at 70°C for starting another cycle of 24h heat ageing at 70°C +/-2°C followed by 2h in the cold chamber at -20°C +/- 2°C. Five repeat cycles were run with three test assemblies for each of the two examples. Before visual inspection for signs of corrosion the sealed polyethylene bags were allowed to thaw. Once thawed, the bags were opened. The test assemblies were stripped from the cotton and conditioned for 24 hours at ambient conditions ( 23°C +/-2°C and rel. humidity 50 +/- 5°C). Then all test assemblies were visually inspected and rated "PASS" if test assemblies did not show any traces of corrosion and "FAIL" if corrosion signs could be found.

**Table 1: List of materials**

| Material | Function | Description |
|---|---|---|
| Epikote 828 | Epoxy resin | Trade designation of a liquid reaction product of epichlorohydrin and bisphenol A having an approximate epoxy equivalent weight of 184 - 190 grams/equivalent. Commercially available by Momentive. |
| PK-HP 200 | Thermoplastic resin | Trade designation of a phenoxy resin. Commercially available by InChem Corporation. |
| Paraloid 2650A | Toughening agent | Trade designation of a core-shell toughening agent based on butadiene rubber. Commercially available by Rohm and Hass. |
| Amicure CG1200 | Primary Curative | Trade designation of 2-cyanoguanidine (dicyandiamide), available from Air Products. |
| Omicure U52M | Curative accelerator | Trade designation of 4,4 methylene bisphenyl dimethyl urea, available from CVC Speciality Chemicals, USA. |
| Micropearl F48D | Physical blowing agent | Trade designation of a thermoexpandable microcapsule produced by encapsulating volatile hydrocarbon with acrylic copolymer. Commercially available by Pierce & Stevens Chemical Corp. |
| Glasperlen | Particulate spacer | Trade designation of glass beads (average grain size 90µm), commercially available by Kominex Mineralmahlwerk, GmbH. |

### Example preparation

The epoxy-based composition of the present invention was prepared by combining the ingredients from the list of materials of table 1 in a high speed mixer ( DAC 150 FVZ Speedmixer, from Hauschild Engineering) stirring at 3000 rpm. In Table 2, all concentrations are given as wt.%.
In a first step the epoxy resin, the thermoplastic phenoxy resin and the core shell toughening agent were mixed together for 2 minutes. The mixture was then placed into an air-driven oven at a temperature of 95 °C for about 1 hour. The hot mixture was again stirred for 2 minutes at 3000 rpm in the speed mixer to ensure complete dispersion of the three ingredients. Then the mixer temperature was reduced to 60°C and the two curatives (Amicure CG1200 and Omnicure U52M) together with the physical blowing agent, and optionally the filler material and/or the glass beads, were added to the mixture, followed by mixing for an additional 2 minutes under vacuum. The resulting uniform mixture had a paste-like consistency. By using a knife coater the mixture was hot coated to a film having thickness of 0.4 mm. The formed film was soft and homogenous when cooled down.

**Table 2:**

| Raw materials | |
|---|---|
| | Example 1 |
| Epikote 828 | 54.5 |
| PK-HP 200 | 26.0 |
| Paraloid 2650A | 13.5 |
| Amicure CG1200 | 3.3 |
| Omicure U52M | 1.5 |
| Micropearl F48D | 1.3 |
| Glasperlen 90 µm | 1 |

The adhesive layer was then once embossed with a microstructure using a polyethylene mesh as previously described (example 1) and once the adhesive layer was used for making the test assemblies without the step of embossing (example 2). Test assemblies were made as described before (3 test assemblies per example) and all results are listed below in table 3.

**Table 3:**

| Example No. | Pass = no corrosion |
|---|---|
| | Fail = corrosion |
| 1 | Pass/Pass/Pass |
| 2 | Fail/Fail/Fail |

As can be seen from the results shown in Table 3, the test assemblies using embossed adhesive sheets show no signs of corrosion.

## Claims

1. A method of making a metal panel assembly, the method comprising:
- providing a first metal panel having a first body portion and a first flange along a margin of the first body portion adjacent a first end of the first body portion;
- providing a second metal panel having a second body portion and a second flange along a margin of the second body portion adjacent a second end of the second body portion;
- providing an elongate adhesive sheet having a first portion near a first end of the width of the elongate adhesive sheet and a second portion near a second end opposite to the first end of the elongate adhesive sheet, the elongate adhesive sheet comprising a thermosettable composition, the elongate adhesive sheet having on at least one major surface a plurality of microstructures;
- applying the elongate adhesive sheet to said first or second metal panel;
- folding the first flange of the first panel over said second flange of said second panel;
whereby a metal joint is obtained wherein the elongate adhesive sheet is folded such that the first portion of the elongate adhesive sheet is between the second flange of said second panel and said first body portion of said first panel and the second portion of the elongate adhesive sheet is between said first flange of said first panel and said second flange of said second panel;
- heating the metal joint so as to cause thermosetting of the thermosettable composition of the elongate adhesive sheet, thereby adhering said first and second metal panel and sealing the metal joint.

2. Method according to claim 1 wherein the elongate adhesive sheet is applied to the second flange of the second panel around the second end of said second panel such that the first portion of the elongate adhesive sheet is on one side of the second flange and the second portion of the elongate adhesive sheet is on the opposite side of the second flange and whereby the surface of the elongate adhesive sheet applied to the second flange comprises said microstructures.

3. Method according to any of the previous claims wherein the plurality of microstructures comprises a plurality of channels separated by ridges and wherein the channel depth as measured between the floor of a channel and top of the ridges forming the walls of the channel is between 50 and 500 µm.

4. Method according to any of the previous claims wherein said elongate adhesive sheet is heated prior to, while or subsequent to applying the elongate adhesive sheet to the first or second metal panel.

5. Method according to claim 4 wherein said heating is carried out at a temperature between 30 and 100°C.

6. Method according to any of claims 4 or 5 wherein the elongate adhesive sheet is heated by blowing warm air of a temperature between 30 and 140°C onto the elongate adhesive sheet.

7. Method according to any of the previous claims wherein the thermosettable composition comprises an epoxy compound and an epoxy curing agent.

8. Method according to claim 7 wherein the thermosettable composition further comprises a thermoplastic resin.

9. Method according to claim 8 wherein the thermoplastic resin comprises a thermoplastic resin having a softening point comprised between 60°C and 140°C.

10. Method according to any of claims 7 to 9 wherein the epoxy compound comprises an epoxy compound having an average epoxy equivalent weight of not more than 250 g/equivalent.

11. Method according to any of the previous claims wherein the elongate adhesive sheet has an elongation at break of at least 60% when measured according to tensile test DIN EN ISO 527.

12. Method according to any of the previous claims wherein the plurality of microstructures comprises a series of interconnected channels defined by a series of channels along a first orthogonal direction in plane of the elongate adhesive sheet and a series of channels along a second orthogonal direction in plane of the elongate adhesive sheet, the interconnected channels thereby defining a series of plateaus between them.

13. Method according to claim 12 wherein the distance between the channels is between 0.1 and 10 mm.

14. Method according to claim 12 or 13 wherein the depth of the channels is between 100 and 400 micron.

15. Method according to any of the previous claims wherein the temperature of optional heating of the elongate adhesive sheet, the composition of the thermosettable composition and the geometry and size of the microstructures is selected such that the microstructures do not disappear or substantially disappear following application of the elongate adhesive sheet to the first or second metal panel.

## Patentansprüche

1. Verfahren zur Herstellung eines Metallplattenaufbaus, wobei das Verfahren Folgendes umfasst:
- Bereitstellen einer ersten Metallplatte mit einem ersten Körperabschnitt und einem ersten hervorstehenden Rand entlang einer Begrenzung des ersten Körperabschnitts neben einem ersten Ende des ersten Körperabschnitts;
- Bereitstellen einer zweiten Metallplatte mit einem zweiten Körperabschnitt und einem zweiten hervorstehenden Rand entlang einer Begrenzung des zweiten Körperabschnitts neben einem zweiten Ende des zweiten Körperabschnitts;
- Bereitstellen einer verlängerten Klebefolie mit einem ersten Abschnitt nahe einem ersten Ende der Breite der verlängerten Klebefolie und einem zweiten Abschnitt nahe einem dem ersten Ende gegenüberliegenden zweiten Ende der verlängerten Klebefolie, wobei die verlängerte Klebefolie eine wärmehärtbare Zusammensetzung umfasst, wobei die verlängerte Klebefolie auf mindestens einer Hauptoberfläche eine Vielzahl von Mikrostrukturen aufweist;
- Aufbringen der verlängerten Klebefolie auf die erste oder die zweite Metallplatte;
- Falten des ersten hervorstehenden Rands der ersten Platte über den zweiten hervorstehenden Rand der zweiten Platte;
wobei dadurch ein metallisches Verbindungsstück erhalten wird, wobei die verlängerte Klebefolie so gefaltet wird, dass der erste Abschnitt der verlängerten Klebefolie sich zwischen dem zweiten hervorstehenden Rand der zweiten Platte und dem ersten Körperabschnitt der ersten Platte befindet und dass sich der zweite Abschnitt der verlängerten Klebefolie zwischen dem ersten hervorstehenden Rand der ersten Platte und dem zweiten hervorstehenden Rand der zweiten Platte befindet;
- Erhitzen des metallischen Verbindungsstücks, um eine Wärmehärtung der wärmehärtbaren Zusammensetzung der verlängerten Klebefolie zu bewirken, wobei dadurch die erste und die zweite Metallplatte aneinandergeklebt werden und das metallische Verbindungsstück versiegelt wird.

2. Verfahren nach Anspruch 1, wobei die verlängerte Klebefolie auf den zweiten hervorstehenden Rand der zweiten Platte um das zweite Ende der zweiten Platte herum derart aufgebracht wird, dass der erste Abschnitt der verlängerten Klebefolie sich auf einer Seite des zweiten hervorstehenden Rands befindet, und sich der zweite Abschnitt der verlängerten Klebefolie auf der gegenüberliegenden Seite des zweiten hervorstehenden Rands befindet, und wobei die Oberfläche der auf den zweiten hervorstehenden Rand aufgebrachten verlängerten Klebefolie die Mikrostrukturen umfasst.

3. Verfahren nach einem der vorhergehenden Ansprüche, wobei die Vielzahl von Mikrostrukturen eine Vielzahl von durch Rippen getrennten Kanälen umfasst, und wobei die Kanaltiefe, die vom Boden eines Kanals zur Oberseite der die Wände des Kanals bildenden Rippen gemessen wird, zwischen 50 und 500 µm beträgt.

4. Verfahren nach einem der vorhergehenden Ansprüche, wobei die verlängerte Klebefolie vor, während, oder nach dem Aufbringen der verlängerten Klebefolie auf die erste oder die zweite Metallplatte erhitzt wird.

5. Verfahren nach Anspruch 4, wobei das Erhitzen bei einer Temperatur zwischen 30 und 100 °C erfolgt.

6. Verfahren nach einem der Ansprüche 4 oder 5, wobei die verlängerte Klebefolie erhitzt wird, indem heiße Luft mit einer Temperatur zwischen 30 und 140 °C auf die verlängerte Klebefolie geströmt wird.

7. Verfahren nach einem der der vorhergehenden Ansprüche, wobei die wärmehärtbare Zusammensetzung eine Epoxidverbindung und ein Epoxidaushärtungsmittel umfasst.

8. Verfahren nach Anspruch 7, wobei die wärmehärtbare Zusammensetzung ferner ein thermoplastisches Harz umfasst.

9. Verfahren nach Anspruch 8, wobei das thermoplastische Harz ein thermoplastisches Harz mit einem Erweichungspunkt zwischen 60 °C und 140 °C umfasst.

10. Verfahren nach einem der Ansprüche 7 bis 9, wobei die Epoxidverbindung eine Epoxidverbindung mit einem durchschnittlichen Epoxid-Äquivalentgewicht von höchstens 250 g/Äquivalent umfasst.

11. Verfahren nach einem der vorhergehenden Ansprüche, wobei die verlängerte Klebefolie eine Reißdehnung von mindestens 60 %, gemessen gemäß der Dehnungsprüfung DIN EN ISO 527, aufweist.

12. Verfahren nach einem der vorhergehenden Ansprüche, wobei die Vielzahl von Mikrostrukturen eine Reihe von miteinander verbundenen Kanälen umfasst, die von einer Reihe von Kanälen entlang einer ersten senkrechten Richtung in der Ebene der verlängerten Klebefolie und von einer Reihe von Kanälen entlang einer zweiten senkrechten Richtung in der Ebene der verlängerten Klebefolie gebildet werden, so dass die miteinander verbunden Kanäle dadurch eine Reihe von erhöhten Flächen zwischen sich bilden.

13. Verfahren nach Anspruch 12, wobei der Abstand zwischen den Kanälen zwischen 0,1 und 10 mm beträgt.

14. Verfahren nach Anspruch 12 oder 13, wobei die Tiefe der Kanäle zwischen 100 und 400 Mikrometer beträgt.

15. Verfahren nach einem der vorhergehenden Ansprüche, wobei die Temperatur der wahlweisen Erhitzung der verlängerten Klebefolie, die Zusammensetzung der wärmehärtbaren Zusammensetzung und die Gestaltung und Größe der Mikrostrukturen derart gewählt wird, dass die Mikrostrukturen nach dem Aufbringen der verlängerten Klebefolie auf die erste oder die zweite Metallplatte nicht verschwinden oder nicht wesentlich verschwinden.

## Revendications

1. Procédé de fabrication d'un ensemble de panneau métallique, le procédé comprenant :
- la fourniture d'un premier panneau métallique possédant une première partie de corps et un premier rebord le long d'un bord de la première partie de corps à côté d'une première extrémité de la première partie de corps ;
- la fourniture d'un deuxième panneau métallique possédant une deuxième partie de corps et un deuxième rebord le long d'un bord de la deuxième partie de corps à côté d'une deuxième extrémité de la première partie de corps ;
- la fourniture d'une feuille adhésive allongée possédant une première partie près d'une première extrémité de la largeur de la feuille adhésive allongée et une deuxième partie près d'une deuxième extrémité opposée à la première extrémité de la feuille adhésive allongée, la feuille adhésive allongée comprenant une composition thermodurcissable, la feuille adhésive allongée possédant sur au moins une surface principale une pluralité de microstructures ;
- l'application de la feuille adhésive allongée sur ledit premier ou deuxième panneau métallique ;
- le pliage du premier rebord du premier panneau sur ledit deuxième rebord dudit deuxième panneau ;
moyennant quoi un joint de métal est obtenu dans lequel la feuille adhésive allongée est pliée de telle sorte que la première partie de la feuille adhésive allongée se trouve entre le deuxième rebord dudit deuxième panneau et ladite première partie de corps dudit premier panneau et la deuxième partie de la feuille adhésive allongée se trouve entre ledit premier rebord dudit premier panneau et ledit deuxième rebord dudit deuxième panneau ;
- le chauffage du joint de métal afin d'amener le thermodurcissement de la composition thermodurcissable de la feuille adhésive allongée, ce qui fait adhérer lesdits premier et deuxième panneaux métalliques et scelle le joint de métal.

2. Procédé selon la revendication 1, dans lequel la feuille adhésive allongée est appliquée au deuxième rebord du deuxième panneau autour de la deuxième extrémité dudit deuxième panneau de telle sorte que la première partie de la feuille adhésive allongée se trouve sur un côté du deuxième rebord et la deuxième partie de la feuille adhésive allongée se trouve du côté opposé du deuxième rebord et moyennant quoi la surface de la feuille adhésive allongée appliquée au deuxième rebord comprend lesdites microstructures.

3. Procédé selon l'une quelconque des revendications précédentes, dans lequel la pluralité de microstructure comprend une pluralité de canaux séparés par des crêtes et dans lequel la profondeur de canal telle que mesurée entre le fond d'un canal et le sommet des crêtes formant les parois du canal est comprise entre 50 et 500 µm.

4. Procédé selon l'une quelconque des revendications précédentes, dans lequel ladite feuille adhésive allongée est chauffée avant, pendant ou après l'application de la feuille adhésive allongée sur le premier ou deuxième panneau métallique.

5. Procédé selon la revendication 4, dans lequel ledit chauffage est effectué à une température comprise entre 30 et 100 °C.

6. Procédé selon l'une quelconque des revendications 4 ou 5, dans lequel la feuille adhésive allongée est chauffée par soufflage d'air chaud d'une température comprise entre 30 et 140 °C sur la feuille adhésive allongée.

7. Procédé selon l'une quelconque des revendications précédentes, dans lequel la composition thermodurcissable comprend un composé époxy et un agent de durcissement d'époxy.

8. Procédé selon la revendication 7, dans lequel la composition thermodurcissable comprend en outre une résine thermoplastique.

9. Procédé selon la revendication 8, dans lequel la résine thermoplastique comprend une résine thermoplastique possédant un point de ramollissement compris entre 60 °C et 140 °C.

10. Procédé selon l'une quelconque des revendications 7 à 9, dans lequel le composé époxy comprend un composé époxy possédant un poids moyen d'équivalent époxy de pas plus de 250 g/équivalent.

11. Procédé selon l'une quelconque des revendications précédentes, dans lequel la feuille adhésive allongée a un allongement à la rupture d'au moins 60 % lorsqu'on mesure selon l'essai de traction DIN EN ISO 527.

12. Procédé selon l'une quelconque des revendications précédentes, dans lequel la pluralité de microstructure comprend une série de canaux interconnectés définis par une série de canaux le long d'une première direction orthogonale dans le plan de la feuille adhésive allongée et une série de canaux le long d'une deuxième direction orthogonale dans le plan de la feuille adhésive allongée, les canaux interconnectés définissant de ce fait une série de plateaux entre eux.

13. Procédé selon la revendication 12, dans lequel la distance entre les canaux est comprise entre 0,1 et 10 mm.

14. Procédé selon la revendication 12 ou 13, dans lequel la profondeur des canaux est comprise entre 100 et 400 micromètres.

15. Procédé selon l'une quelconque des revendications précédentes, dans lequel la température de chauffage facultatif de la feuille adhésive allongée, la composition de la composition thermodurcissable et la géométrie et la taille des microstructures sont choisies de telle sorte que les microstructures ne disparaissent pas ou ne disparaissent pas essentiellement après application de la feuille adhésive allongée sur le premier ou deuxième panneau métallique
